# EUROPEAN PATENT SPECIFICATION

(11) **EP 1 748 388 B1**
(45) Date of publication and mention of the grant of the patent: **18.04.2012**
(21) Application number: 06015521.5
(22) Date of filing: 25.07.2006
(51) Int. Cl.: G06T 7/00

(54) **Mobile communication terminal with means for estimating motion direction and method thereof**
Mobiles Kommunikationsendgerät mit Mittel zur Bestimmung der Bewegungsrichtung und entsprechendes Verfahren
Terminal de communication mobile avec moyens pour determiner la direction de mouvement et procédé correspondent

(30) Priority: 25.07.2005 KR 20050067204
(43) Date of publication of application: 31.01.2007
(73) Proprietor: LG ELECTRONICS INC., Yeongdeungpo-gu Seoul 150-721 (KR)
(72) Inventor: Lee, Seung Min, Seoul (KR)
(74) Representative: Katérle, Axel

(56) References cited:
- EP-A- 0 538 042
- EP-A- 1 072 863
- EP-A- 1 255 185
- EP-A2- 1 507 196
- WO-A1-00/75914
- WO-A1-2004/066615
- US-A1- 2005 151 724
- AL BOVIK: "Handbook of Image and Video Processing" 2000, ACADEMIC PRESS , CANADA , XP002408359 ISBN: 0121197905 * page 220 - page 222 *

## Description

### BACKGROUND OF THE INVENTION

### Field of the Invention

The present invention relates to a mobile communication terminal and method for estimating a motion direction of the terminal.

### Discussion of the Related Art

A mobile communication terminal according to a related art includes a keypad allowing a user to input data such as text or numerals. However, because the keys on the keypad need to be manipulated one by one to execute a specific function or to input characters or numerals, the key inputting process is time consuming.

Moreover, when a relatively large amount of information is input or displayed, the user must manually page through parts of the information to view the entire contents. Thus, the inputting process on the terminal is time consuming and cumbersome.

WO2004/066615 discloses how images captured by a camera of a hand-held device are used to determine motion of the device, said motion being interpreted as input to a user interface: displayed images can be scrolled, zoomed or rotated by moving the hand-held device.

According to EP1255185 a portable terminal comprises a camera, and motion vectors are detected from the camera images, said motion being used as input, e.g. as handwriting by the user of a character or graphic form, or for signature authentication.

### SUMMARY OF THE INVENTION

Accordingly, one object of the present invention is to address the above-noted and other objects.

Another object of the present invention is to provide a mobile communication terminal and method that can estimate a motion direction of the terminal using a plurality of input pictures taken by a camera on the terminal.

Yet another object of the present invention is to display various types of information corresponding to the estimated motion direction.

To achieve these objects and other advantages and in accordance with the purpose of the invention, as embodied and broadly described herein, the present invention provides a mobile communication device as claimed in claims 1-10 and a method as claimed in claims 11-20.

plurality of pictures and displaying information corresponding to the estimated motion direction.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. In the drawings:

FIG. 1 is a block diagram of a mobile communication terminal for estimating a motion direction according to an embodiment of the present invention;

FIG. 2 is a flowchart illustrating an general method of estimating the motion direction of the terminal according to one embodiment of the present invention;

FIG. 3A is a flowchart illustrating a detailed method of estimating the motion direction of the terminal according to one embodiment of the present invention;

FIG. 3B is an overview illustrating how first and second pictures are arranged to estimate the motion direction of the terminal;

FIG. 3C is a flowchart illustrating a detailed method of estimating the motion direction of the terminal according to another embodiment of the present invention;

FIG. 3D is a flowchart illustrating a detailed method of estimating the motion direction of the terminal according to yet another embodiment of the present invention;

FIG. 4 is a block diagram illustrating a mobile communication terminal for estimating a motion direction according to another embodiment of the present invention;

FIG. 5 is a flowchart illustrating a method of displaying character information corresponding to the estimated motion direction of the terminal according to an embodiment of the present invention;

FIG. 6A is a flowchart illustrating a method of using extracted character data to execute a function on the terminal according to an embodiment of the present invention;

FIG. 6B is a flowchart illustrating a method of using extracted character data to generate a call connection according to an embodiment of the present invention; and

FIG. 7 is a flowchart of a method of displaying pages of information based on the estimated motion direction according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

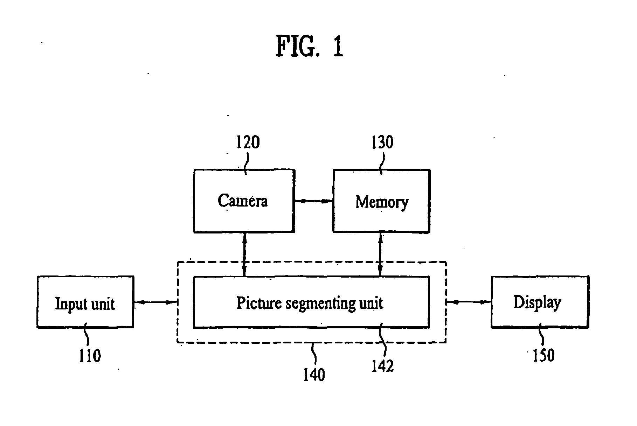

Turning first to FIG. 1, which is a block diagram of a mobile communication terminal for estimating a motion direction according to an embodiment of the present invention. As shown, the mobile communication terminal includes an input unit 110, a camera 120, a memory 130, a processor 140, and a display 150. Further, the processor 140 includes a picture segmenting unit 142.

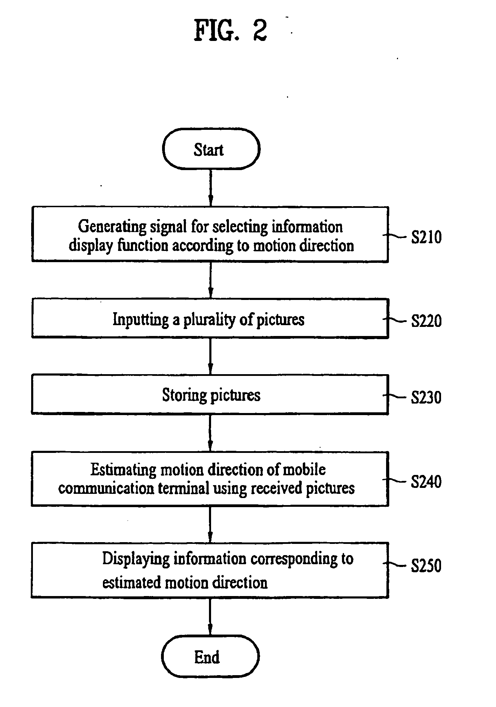

Next, FIG. 2 is a flowchart illustrating a method of estimating the motion direction of the terminal according to one embodiment of the present invention. FIG. 1 will also be referred to in this description. As shown in FIG. 2, the input unit 110 generates a signal (hereinafter called 'selection signal') for selecting a function indicating specific information according to a motion direction of the terminal (S210). That is, the user selects a key or keys on the input unit 110 to generate the selection signal for selecting the function indicating specific information according to the motion direction of the terminal.

After the user selects the motion direction function, the camera 120 takes a plurality of pictures (S220). That is, when the selection signal is generated, the camera 120 is set into an operation mode to automatically take a plurality of pictures.

The pictures are then stored in the memory 130 (S230). The processor 140 and picture segmenting unit 142 then process the plurality of pictures to determine a motion direction of the terminal (S240). The information according to an estimated motion direction using the plurality of pictures is then displayed to the user on the display 150 (S250).

In addition, the function indicating specific information according to a motion direction may be a character display function, a page display function, a display function in which a partial picture indicating a motion direction of the terminal is displayed, etc.

Further, a specific key on the input unit 110 may be used to allow the user to select the function indicating specific information according to the motion direction of the terminal. For example, the specific key may be a key that is assigned a plurality of specific functions including the motion direction function.

Alternatively, the specific key may be a key separately provided for the function. In addition, to generate the selection signal, the specific key may be pressed once or a set number of times. Alternatively, the specific key may be pressed for a particular length of time to generate the selection signal.

Further, as discussed above, when the selection signal is generated, the camera 120 is set into an operation mode to automatically take a plurality of pictures. Thus, the camera 120 sequentially takes a plurality of different pictures which correspond to movement of the terminal.

For instance, when the terminal moves in a left direction, the camera 120 takes a plurality of pictures gradually moving in the left direction. Thus, when the pictures are combined together in a time sequence, information can be displayed to the user indicating the terminal is moving in the left direction.

In addition, the camera 120 preferably takes the plurality of the pictures at a constant rate. For example, the constant rate may be 16 frames per second, 32 frames per second, etc. Further, the frame is a unit picture among consecutive pictures. Also, the plurality of available picture input rates may be displayed to the user to allow the user to select which frame rate he or she prefers. Then, the camera 120 takes the plurality of pictures consecutively at the selected frame rate. A default frame rate may also be set.

In addition, because the space available in the memory 130 may be limited, the processor 140 periodically checks the storage capacity of the memory 130. If the processor 140 determines the storage capacity of the memory 130 is equal to or smaller than a predetermined storage capacity, the processor 140 displays a warning to the user about the low storage capacity. For example, the processor 140 may display a warning message and a plurality of previously taken pictures that the user may select to be deleted. Then, the previously taken pictures selected by the use can be deleted to increase the storage capacity of the memory 130.

Further, when estimating the motion direction of the terminal, the picture segmenting unit 142 segments the taken pictures into a plurality of blocks. The processor 140 then determines if any blocks match. In more detail, the camera 120 may take a formerly taken picture and then a latterly taken picture. Then, the picture segmenting unit 142 divides the formerly taken picture (first picture) and the latterly taken picture (second picture) into a predetermined number of blocks (e.g., 9 blocks for each picture). The processor 140 then determines if any of the blocks from the formerly taken picture match any of the blocks in the latterly taken picture.

If one or more blocks match, the processor 140 matches together the two pictures at the matching blocks to determine whether the terminal has moved in a left, right, up or down direction. East, West, North and South directions may also be used. In more detail, the processor 140 arranges the formerly and latterly taken pictures over each other using the matching block or blocks as a reference. The processor 140 is then able to estimate the motion direction of the terminal as the 'left direction' if the latterly picture is arranged in a left direction against the formerly taken picture. In addition, rather than using first and second pictures, the plurality of blocks may be divided at a particular position and then the divided blocks may be compared.

The processor 140 may also obtain the motion direction of the terminal by selecting a position of a reference block in the latterly taken picture and then marking a corresponding position in the formerly taken picture. In this instance, the processor 140 can obtain the moving direction of the terminal by tracing the reference block from the formerly taken picture to the latterly taken picture and choosing the motion direction as a direction opposite to the obtained moving direction.

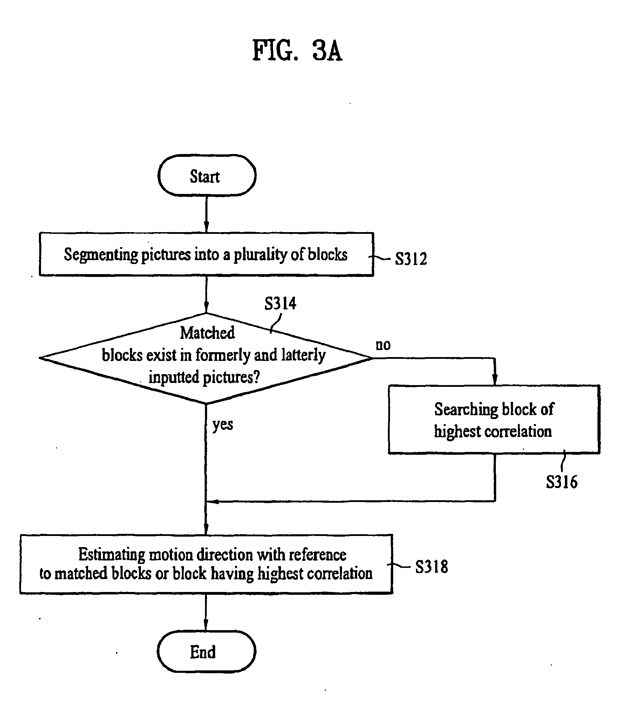

Turning next to FIG. 3A, which is a flowchart illustrating a detailed method of determining the motion direction of the terminal according to one embodiment of the present invention. FIG. 1 will also be referred to in this description. As shown, the picture segmenting unit 142 divides the taken pictures into a plurality of blocks of equal size (S312).

Next, the processor 140 determines if any blocks in the first picture (formerly taken picture) match any blocks in the second picture (latterly taken picture) (S314). In more detail, each block includes a plurality of pixels that can used to see if any blocks match.

If the processor 140 determines no blocks match (No in S314), the processor 140 uses a correlation process to see what blocks have a highest correlation with each other (S316). That is, the processor 140 searches the plurality of the blocks configuring the formerly taken picture for a block having a highest correlation with a specific block of the latterly taken picture (or vice versa).

In more detail, the processor 140 calculates a pixel value for the plurality of pixels of each block in the latterly taken picture, and then searches for a block having a highest correlation among the blocks in the formerly taken picture. In this example, the pixel value for each block is automatically calculated by the processor 140. Thus, the blocks having the most similar pixel value have the highest correlation.

If the processor 140 determines a block or blocks of the two pictures match (Yes in S314), the processor 140 estimates the motion direction of the terminal using the matched block(s) as a reference. Similarly, after the processor 140 determines the blocks that have the highest correlation in step S316, the processor 140 estimates the motion direction of the terminal using the highest correlation blocks as a reference.

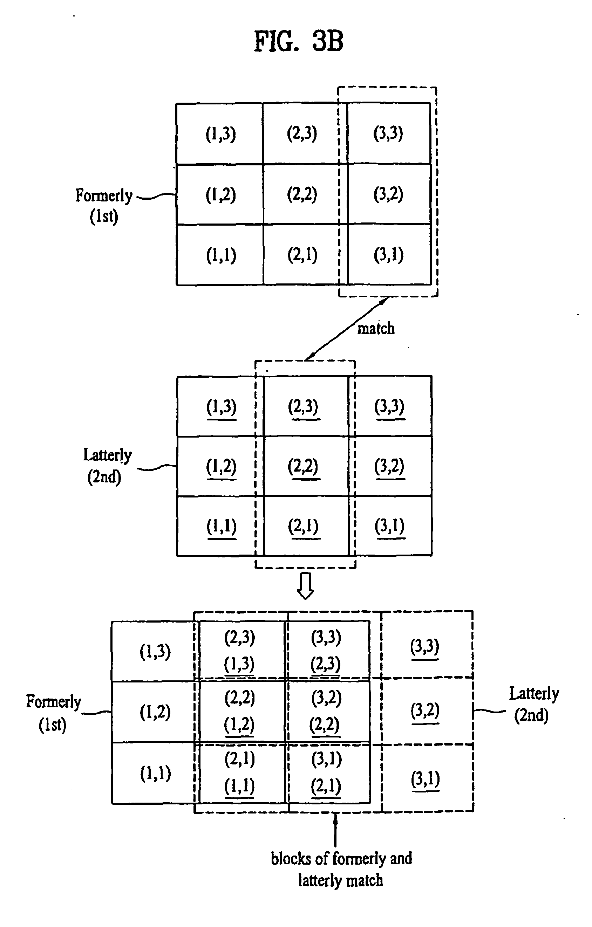

Turning now to FIG. 3B, which is an overview of formerly and latterly taken pictures, which are used to determine the motion direction of the terminal. In this example, each picture is divided into 9 blocks (i.e., 3*3 blocks). As discussed above, the motion direction may be represented as an 'upward direction', 'downward direction', 'left direction', 'right direction' or any combination thereof. Alternatively, the motion direction may be represented as an 'east direction', 'west direction', 'north direction', 'south direction' or any combination thereof.

Thus, with reference to FIG. 3B, if blocks (3, 1), (3, 2) and (3, 3) in the formerly taken picture match blocks (2, 1), (2, 2) and (2, 3) in the latterly taken picture, the processor 140 arranges or overlays the formerly and latterly taken pictures with reference to the respectively matched blocks (see the bottom portion of FIG. 3B). The processor 140 then estimates the motion direction of the terminal as being in the 'right direction' or 'east direction', because the latterly taken picture (second picture) is located in the 'right direction' or 'east direction' against the formerly taken picture (first picture) with reference to the matched blocks.

Similarly, although not explicitly shown in FIG. 3B, if blocks (1, 2), (2, 2) and (3, 2) in the formerly taken picture match blocks (1, 3), (2, 3) and (3, 3) in the latterly taken picture, the processor 140 arranges the formerly and latterly taken pictures with reference to the respectively matched blocks and then estimates the motion direction as the 'downward direction' or 'south direction', because the latterly taken picture is downward or south of the formerly taken picture.

In yet another example, if a single block (3, 1) in the formerly taken picture matches a block (1, 3) in the latterly taken picture, the processor 140 arranges the formerly and latterly taken pictures with reference to the matched block and then estimates the motion direction as the 'southeast direction', because the latterly taken picture is southeast of the formerly taken picture.

In addition, the processor 140 can also estimate a motion direction of the terminal by calculating respectively a motion vector value of blocks included in each of the two consecutively taken pictures. For instance, if two consecutively taken pictures are segmented into 8*8 blocks, and the block (1, 1) of the formerly taken picture matches the block (4, 5) of the latterly taken picture, the processor 140 calculates a motion vector value by estimating a vector value of the block (1, 1) from a vector value of the block (4, 5) using the latterly taken picture as a reference picture. Then, the processor 140 estimates the motion direction of the terminal using the calculated motion vector value.

In addition, similar to the above description with respect to matching blocks, the processor 140 may also use blocks that have a highest correlation among each other. For example, when a block (2, 2) in the latterly taken picture has a highest correlation with a block (3, 2) in the formerly taken picture, the processor 140 arranges the formerly and latterly taken pictures with reference to the blocks having the highest correlation and then estimates the motion direction as the 'right direction' or 'east direction' (i.e., the latterly taken picture is right or east of the formerly taken picture).

In still another example, when a block (1, 3) in the latterly taken picture has a highest correlation with a block (3, 1) in the formerly inputted picture, the processor 140 arranges the formerly and latterly taken pictures with reference to the block having the highest correlation and then estimates the motion direction as 'southeast direction'.

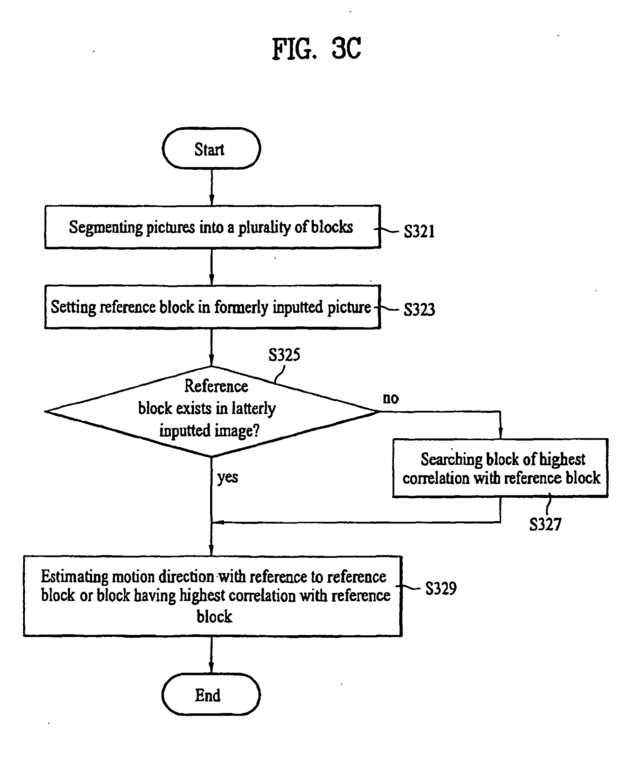

Turning next to FIG. 3C, which is a flowchart of a detailed method of estimating a motion direction of the terminal according to another embodiment of the present invention. As shown, the picture segmenting unit 142 segments the taken picture into a plurality of blocks (S321) (similar to the step S312 in FIG. 3A). Then, the processor 140 selects two consecutively taken pictures from a plurality of taken pictures and sets a reference block in a formerly taken picture of the two pictures. That is, the formerly taken picture corresponds to a picture taken before the latterly taken picture.

The processor 140 then selects a random block among the divided blocks of the formerly taken picture as a reference block (S323), and searches the latterly taken picture to determine if the same reference block exists therein (S325). In addition, the processor 140 preferably selects the block located at a center among the plurality of blocks as the reference block.

Further, the processor 140 decides a presence or non-presence of the reference block in the latterly taken picture using a block matching algorithm. In more detail, the block matching algorithm is a method of segmenting a picture into blocks equal in size and representing all pixels within each of the blocks as a motion vector. Then, the block matching algorithm finds a block most similar to a block of the latterly taken picture by moving blocks of a formerly taken picture by one pixel to find a motion vector. As a matching reference, a mean absolute error, a mean squared error, etc. may be used.

Thus, the processor 140, which previously calculated and stored an overall pixel value for the reference block, calculates an overall pixel value for each block of the latterly taken picture and compares these pixels values to determine if the reference block in the formerly taken picture also exists in the latterly taken picture.

When the processor 140 determines the reference block does not exist (No in S325), the processor 140 searches the blocks in the latterly taken picture for a block having a highest correlation with the reference block (S327). The processor 140 searches the block having the highest correlation with the reference block using the block matching algorithm. The processor 140 then estimates the motion direction of the terminal with reference to a position of the reference block having the highest correlation (S329).

When the processor 140 determines the reference block does exist (Yes in S325), the processor 140 estimates the motion direction of the terminal with reference to a position of the reference block (S329). The motion direction is estimated in a similar manner as that discussed above with respect to FIGS. 3A and 3B.

In more detail, when the formerly and latterly taken pictures are divided into 9 blocks (3*3 blocks), the block (2, 2) in the formerly taken picture is set as the reference block, and the block (1, 3) in the latterly taken picture matches or has the highest correlation with the reference block, the processor 140 decides that a position of the reference block has moved to (1, 3) from (2, 2). Thus, the processor 140 estimates the motion direction to be in a direction opposite to the moving direction of the reference block.

In another example, when the block (2, 2) in the formerly taken picture is set as the reference block and the processor 140 determines the block (3, 2) in the latterly taken picture matches the reference block, the processor 140 decides that a position of the reference block has moved to (3, 2) from (2, 2). The processor 140 then estimates the motion direction of the terminal as being opposite to the moving direction of the reference block.

A similar process is used for blocks having a highest correlation among each other. For instance, when the processor 140 sets the block (2, 2) in the formerly taken picture as the reference block and determines the block (1, 3) in the latterly taken picture has the highest correlation with the reference block, the processor 140 decides that a position of the reference block has moved to (1, 3) from (2, 2). The processor 140 then estimates a direction opposite to the moving direction of the reference block as the motion direction.

In another example, when the processor 140 sets the block (2, 2) in the formerly taken picture as the reference block and determines the block (3, 2) in the latterly taken picture has the highest correlation with the reference block, the processor 140 decides that a position of the reference block has moved to (3, 2) from (2, 2). The processor 140 then estimates a direction opposite to the moving direction of the reference block as the motion direction.

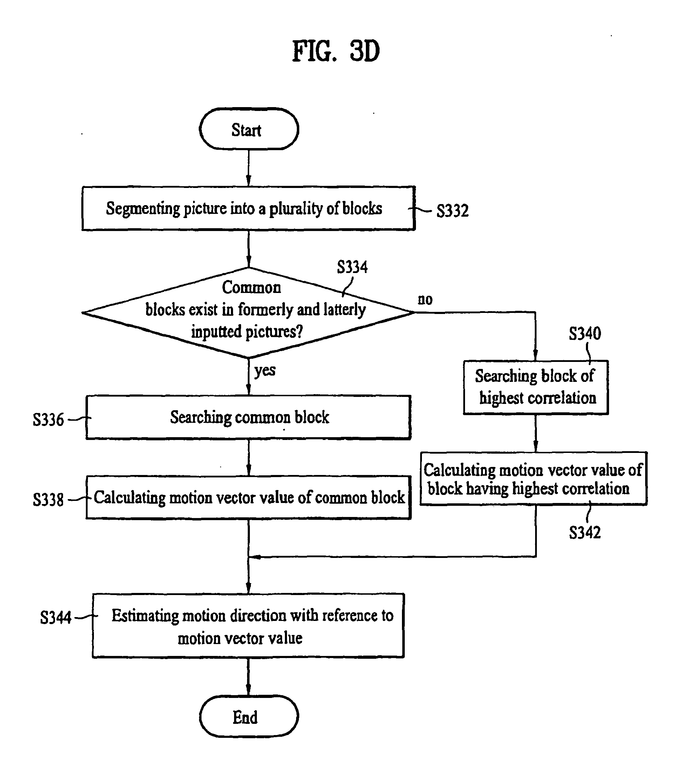

Turning next to FIG. 3D, which is a flowchart of a method of estimating a motion of the terminal according to yet another embodiment of the present invention. FIG. 1 will also be referred to in this description. As shown, similar to the previous embodiments, the picture segmenting unit 142 segments the taken picture into a plurality of blocks (S332).

The processor 140 then determines whether or not there exists a block that is common (hereinafter called a 'common block') included in two consecutively taken pictures (S334). For instance, the processor 140 calculates and stores a pixel value for each block in the formerly taken picture and in the latterly taken picture of the two consecutively taken pictures. Then, the processor 140 compares the calculated pixel values of the formerly taken picture with the calculated pixel values of the latterly taken picture to determine if the common block exists in the formerly and latterly taken pictures.

If the processor 140 determines the common block exists, the processor 140 searches for a position of the common block in each of the formerly and latterly taken pictures (S336). The processor 140 then calculates a motion vector value of the searched common block (S338).

For example, assume the formerly and latterly taken pictures includes 9 blocks (3*3 blocks). In addition, the processor 140 can recognize a position value of each of the 9 blocks as an (x, y) coordinate value on an X-Y coordinate plane. In particular, the processor 140 determines a position value (1, 1) of a random block as a coordinate value (1, 1) on the X-Y coordinate plane.

Thus, if the block (1, 2) in the formerly taken picture and the block (3, 1) in the latterly taken picture are the common blocks, the processor 140 calculates a motion vector value with reference to the common blocks by eliminating a vector value (1, 3) of the block (1, 3) of the formerly taken picture from a vector value (3, 1) of the block (3, 1) of the latterly taken picture. In addition, if the processor 140 determines a plurality of common blocks exist, the processor 140 calculates all motion vector values for the respective common blocks.

Meanwhile, when the processor 140 determines no common blocks exist (No in S334), the processor 140 searches the blocks of the formerly and latterly taken pictures for blocks having the highest correlation among each other (S340). That is, similar to the embodiment discussed above, the processor 140 recognizes blocks having the most similar pixel value as the blocks having the highest correlation.

Subsequently, the processor 140 calculates a motion vector value of the searched block having the highest correlation (S342). Note the step 342 is similar to the process discussed in step S338. Next, the processor 140 estimates the motion direction of the terminal with reference to the calculated motion vector value (S344).

In more detail, the processor 140 estimates the motion direction by considering a size and direction of the calculated motion vector value. Further, when there are a plurality of common blocks and thus a motion vector value for each common block, the processor 140 calculates an average of the plurality of the motion vector values and estimates the motion direction by considering a size and direction of the calculated average motion vector value.

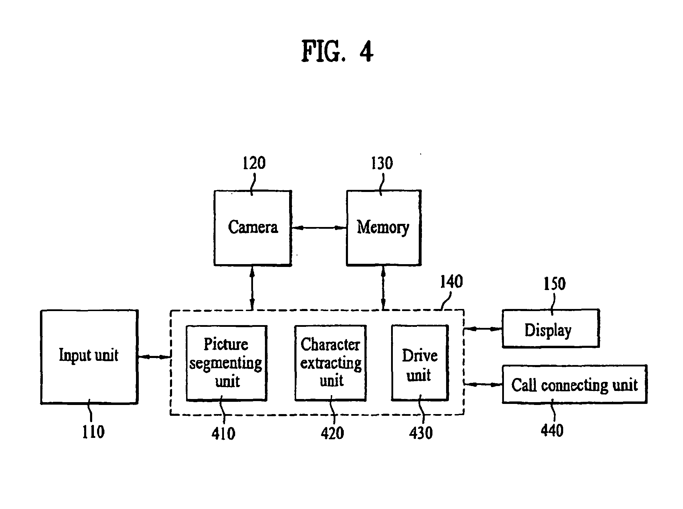

Turning next to FIG. 4, which is a block diagram of a mobile communication terminal for estimating a motion direction of the terminal according to another embodiment of the present invention. As shown, the terminal includes the input unit 110, the camera 120, the memory 130, the processor 140, the picture segmenting unit 410 and the display 150 similar to that as shown in FIG. 1. In addition, the terminal in FIG. 4 also includes a call connecting unit 440, and the processor 140 further includes a character extracting unit 420 and a drive unit 430.

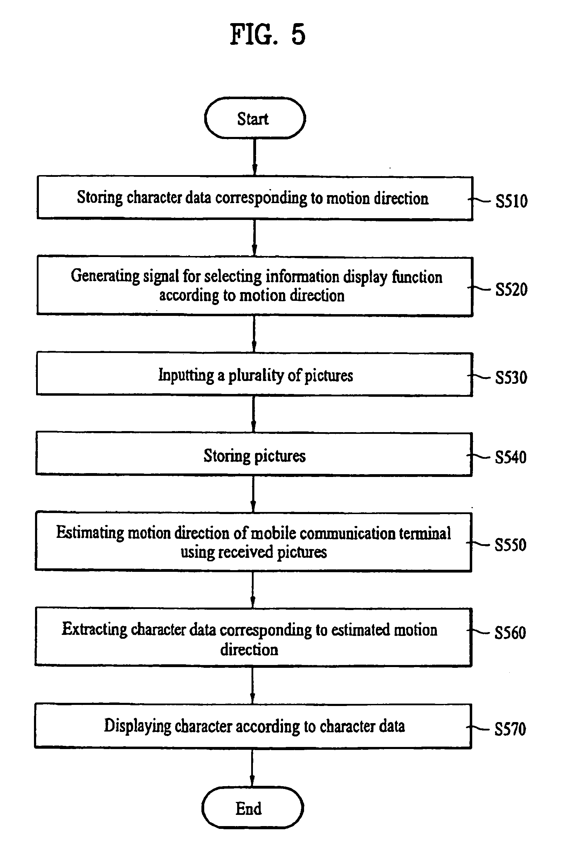

Next, FIG. 5 is a flowchart illustrating a method of extracting and displaying information corresponding to the estimated motion direction of the terminal. FIG. 4 will also be referred to in this description. As shown, character data corresponding to a motion direction of the terminal is stored in the memory 130(S510). That is, the memory 130 stores all character information, languages, symbols, numerals, etc., supported and provided by the terminal.

Moreover, the memory 130 stores the character information, languages, symbols, numerals, etc. in a format that corresponds to motion directions. For instance, the memory 130 may store character data such as '¬ ' indicating a 'right and downward' direction, ' 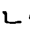 ' indicating a 'downward and right' direction, ' 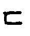 ' indicating a 'right, downward and right' direction, etc. Further, the memory 130 may store character data such as ' 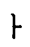 ' indicating a 'downward, upward and right' direction, ' 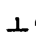 ' indicating a 'downward, left and right' direction, etc.

Further, similar to the embodiment discussed above, the user can select a function indicating specific information according to the motion direction of the terminal by selecting a key or keys on the input unit 110 (S520). The camera 120 then takes a plurality of pictures (S530), the pictures are stored in the memory 130, and the processor 140 estimates the motion direction of the terminal using the plurality of the taken pictures (S550) in a similar manner as discussed above.

Meanwhile, the character extracting unit 420 extracts character data corresponding to the estimated motion direction from the character data stored in the memory 130(S560). As discussed above, the character data accurately indicates the estimated motion direction. For instance, when the processor estimates the motion direction of the terminal as being a 'downward, downward, downward, right and right' direction, the character extracting unit 420 recognizes the motion direction as 'downward and right' and then extracts ' 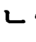 ' from the memory 130.

Similarly, when the processor 140 estimates the motion direction as being a 'right, right, right, downward, downward and downward', the character extracting unit 420 recognizes the motion direction as 'right and downward' and then extracts ' 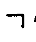 ' from the memory 130. Also, when the processor 140 estimates the motion direction as being a 'downward, downward, downward, upward, upward, right and right', the character extracting unit 420 recognizes the motion direction as 'downward, upward and right' and then extracts ' 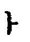 ' from the memory 130.

Further, when the processor 140 estimates the motion direction as being a 'downward, downward, left, left, right, right, right and right', the character extracting unit 420 recognizes the motion direction as 'downward, left and right' and then extracts ' 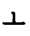 ' from the memory 130. The display 150 then displays the extracted character on the display 150 (S570). For instance, if the extracted character data are ' 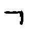 ' and ' 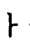 ', the display 150 displays ' 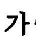 '. If the extracted character data are ' 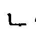 ' and ' 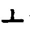 ', the display 150 displays ' 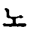 '. Other symbols such as arrows, etc. may be used to display the estimated direction of the terminal.

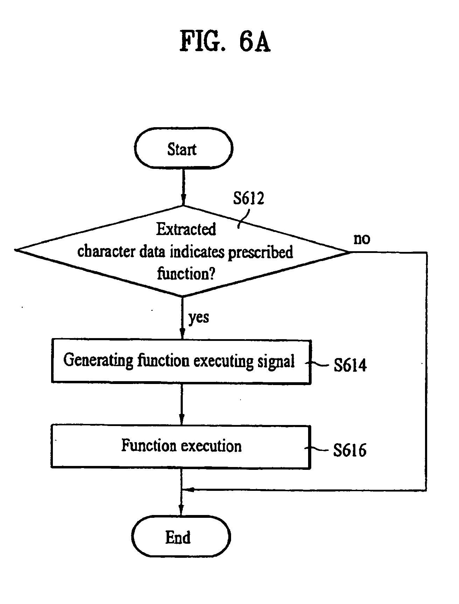

Turning next to FIG. 6A, which is a flowchart illustrating a method of using extracted character data according to an embodiment of the present invention. FIG. 4 will also be referred to in this description. As shown in FIG. 6A, the processor 140 determines whether or not the extracted character data indicates a prescribed function set in the terminal (S612).

For example, when the extracted character data indicates a name of a prescribed function set in the terminal or an abbreviated number corresponding to the prescribed function, the processor 140 determines that the prescribed function is indicated (Yes in S612). For instance, if the extracted character data is 'message', the processor 140 determines a message function set in the terminal is to be executed.

Similarly, if the character data is a number (e.g., the number "7") corresponding to the message function, the processor 140 determines the message function is to be executed. Thus, when the processor 140 determines the character data indicates a prescribed function, the input unit 110 generates an execution signal for executing the prescribed function (S614).

The input unit 110 generates an execution signal according to a user's selection. However, if a generation of the execution signal is set to 'default', the input unit 110 automatically generates the execution signal. The drive unit 430 then executes the prescribed function according to the execution signal (S616). That is, the drive unit 430 includes drive programs for all functions set in the terminal so as to execute the prescribed function.

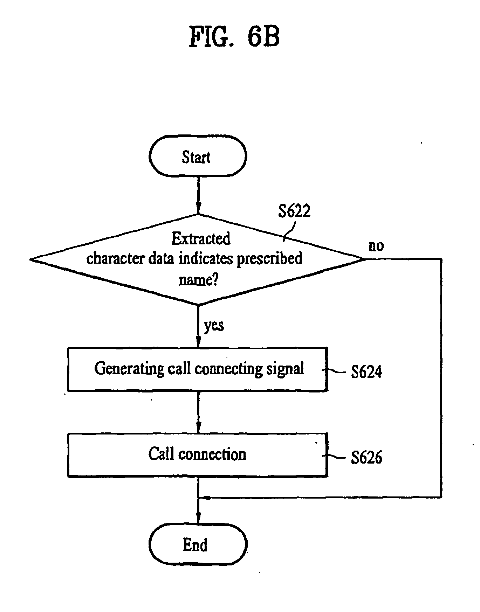

Next, another method of using extracted character data according to an embodiment of the present invention will be described with reference to FIG. 6B. FIG. 4 will also be referred to in this description. As shown in FIG. 6B, the processor 140 determines whether or not the extracted character data indicates a contact party stored in the terminal (S622).

If the extracted character data indicates the name of the contact party terminal or a number corresponding to the prescribed name (Yes in S622), the input unit 110 generates a call connection signal to the contact party corresponding to the prescribed name (S624).

That is, the input unit 110 generates the call connection signal according to a user's selection. However, if the generation of the call connection signal is set to 'default', the input unit 110 automatically generates the call connection signal. Then, the call connecting unit 440 connects a call to the contact party corresponding to the name (S626).

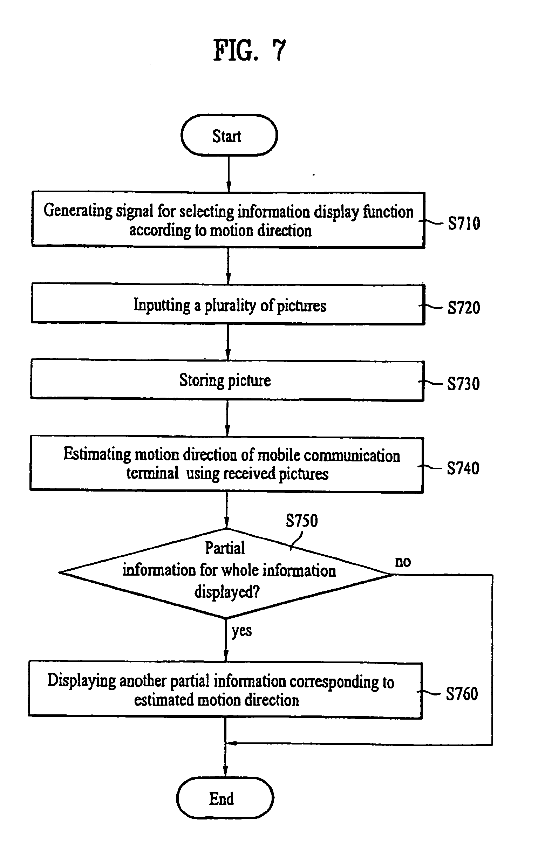

Turning next to FIG. 7, which is a flowchart of a method of displaying pages of information corresponding to the estimate motion direction of the terminal according to still another embodiment of the present invention. FIG. 1 will also be referred to in this description.

Note that Steps S710, S720, S730, and S740 are the same as the corresponding steps S210, S220, S230 and S240 in FIG. 2. Accordingly, a detailed explanation of these steps in FIG. 7 will not be repeated.

In addition, in step S750, the processor 140 determines whether or not the display 150 is currently displaying only partial information out of a total amount of information (S750). In more detail, the total amount of information may be a plurality of pages and the partial information may be a specific one of the plurality of the pages.

For instance, when the display 150 displays a phone number presented on a specific page among a plurality of pages displaying phone numbers stored in the terminal, the processor 140 determines that the partial information is currently being displayed.

Further, the total amount of information may be a whole picture and the partial information may be a portion of the whole picture. For instance, if the display 150 displays a specific area on a whole country map or a specific part of a whole photograph picture, the processor 140 determines that partial information is currently being displayed.

In addition, the total amount of information may be information for a plurality of functions set in the terminal and the partial information may be information for a specific one of the plurality of the functions. For instance, if the display 150 currently displays information for a 'message function' from among a plurality of functions set in the terminal, the processor 140 determines that partial information is currently being displayed. Further, the information for the message function includes a received message list, a sent message list, specific message content, etc.

Also, if the processor 140 determines the display is currently displaying partial information (Yes in S750), the display 150 displays another partial information corresponding to the estimated motion direction. For example, if the estimated motion direction is an 'upward direction', the display 150 displays a front page of a currently displayed page.

Further, if the estimated motion direction is a 'right direction', the display 150 displays a last page of a plurality of pages by moving away from a currently displayed page. In addition, the page moving direction corresponding to the estimated motion direction can be previously set in the mobile terminal or can be set by a user.

Thus, according to the page moving direction corresponding to the estimated motion direction, the processor 140 controls the display 150 to display another page moved from a currently displayed page. For example, if the estimated motion direction is an 'upward direction', the display 150 displays an area away from a specific area currently displayed on a whole country map in the 'upward direction'.

Alternatively, according to the estimated motion direction and distance, the display 150 displays an area moved from a specific area currently displayed on the whole country map. According to the estimated motion direction and distance, the processor 140 controls another picture moved from a currently displayed partial picture for the whole picture to be displayed.

In another example, if the estimated motion direction is an 'upward direction', the display 150 stops displaying information for a currently displayed function and then displays information for a function corresponding to the 'upward direction'. That is, if a motion direction is estimated, the processor 140, in which a moving direction of a function for the estimated motion direction is previously set, controls the display 150 to display information for the moved function according to the estimated motion direction.

Accordingly, the present invention provides the following effects or advantages.

First, the motion direction of the terminal can be estimated using a plurality of pictures taken via a photographing device provided with the terminal. Secondly, because the motion direction is estimated, a specific character corresponding to the estimated motion direction can also be displayed.

Thirdly, because the motion direction of the terminal is estimated, partial information can be displayed to correspond to the estimated motion direction. Fourthly, because character data corresponding to an estimated motion direction is extracted, a specific function indicated by the extracted character data can be executed.

Therefore, the present invention advantageously estimates the motion direction of the terminal and displays information according to the estimated motion direction (and thus the user can see the information according to the estimated motion direction), estimates the motion direction and activates a specific function on the terminal based on the estimated motion direction of the terminal (and thus the user need only move the terminal in a certain direction to activate a specific function), and estimates the motion direction and displays different pages of information based the motion direction of the terminal (and thus the user can page through a plurality of pages by moving the phone in a certain direction).

It will be apparent to those skilled in the art that various modifications and variations can be made in the present invention without departing from the scope of the inventions. Thus, it is intended that the present invention covers the modifications and variations of this invention provided they come within the scope of the appended claims.

## Claims

1. A mobile communication terminal (100), comprising:
a camera (120) configured to take a plurality of pictures comprising at least a formerly and latterly consecutively taken pictures;
a processor (140) configured to estimate the motion direction of the terminal (100) using at least some of the taken plurality of pictures; and
a display (150) configured to display information corresponding to the estimated motion direction;
**characterized by** further comprising:
a memory (130) configured to store the plurality of pictures and character data having a format that corresponds to the estimated motion direction;
a character extracting unit (420) configured to extract character data corresponding to the estimated motion direction from the memory (130);
wherein the processor (140) is further configured to execute a prescribed function set in the mobile terminal if the extracted character data indicates the prescribed function is to be executed.

2. The mobile terminal of claim 1,
wherein the processor (140) is configured to divide the formerly taken picture into a plurality of first blocks and divides the latterly taken picture into a plurality of second blocks.

3. The mobile terminal of claim 2,
wherein the processor (140) is configured to determine if at least one block from the plurality of first blocks matches at least one block from the plurality of second blocks, and if the blocks match, estimates the motion direction of the terminal (100) by arranging the formerly and latterly taken pictures together with matching blocks being used as a reference.

4. The mobile terminal of claim 3,
wherein if the processor (140) determines the at least one block in the first blocks does not match the at least one block in the second blocks, the processor (140) is configured to determine which block from the first blocks has a highest correlation with a block from the second blocks, and to use the blocks with the highest correlation as the reference when estimating the motion direction of the terminal (100).

5. The mobile terminal of claim 2,
wherein the processor (140) is configured to select a reference block in the first blocks and determines whether the reference block is also included in the second blocks, and if the reference block is in both of the first and second blocks, the processor (140) is configured to estimate the motion direction of the terminal (100) by arranging the formerly and latterly taken pictures together with reference blocks being used as a reference.

6. The mobile terminal of claim 5,
wherein if the processor determines the reference block is not also included in the second blocks, the processor (140) is configured to determine which block from the first blocks has a highest correlation with a block from the second blocks, and to use the blocks with the highest correlation as the reference when estimating the motion direction of the terminal.

7. The mobile terminal of claim 2,
wherein the processor (140) is configured to determine whether a common block exists in both of the first and second blocks, and if the common block exists in both of the first and second blocks, the processor (140) is configured to determine a position of the common block in both of the first and second blocks, to calculate a motion vector indicating a movement of the common block from the position in the first blocks to the position in the second blocks, and to estimate the motion direction of the terminal (100) based on the calculated motion vector.

8. The mobile terminal of claim 7,
wherein if the processor determines the common block does not exist in both of the first and second blocks, the processor (140) is configured to determine which block from the first blocks has a highest correlation with a block from the second blocks, and to use the blocks with the highest correlation as the reference when estimating the motion direction of the terminal (100).

9. The mobile terminal of claim 1, wherein the extracted character data data comprises a plurality of pieces of character data, and the processor (140) is configured to determine if a piece of the character data is currently being displayed on the display, and to display a next piece of character data from the plurality of pieces of character data if it is determined the piece of character data is currently being displayed based on the estimated motion direction.

10. The mobile terminal of claim 1, wherein the camera (120) is configured to take the plurality of pictures consecutively at a constant rate.

11. A method of estimating a motion direction of a mobile communication terminal (100), comprising:
taking a plurality of pictures comprising at least a formerly and latterly consecutively taken pictures with a camera (120) provided on the terminal (100);
estimating the motion direction of the terminal (100) using at least some of the taken plurality of pictures; and
displaying information corresponding to the estimated motion direction
the method **characterized by** further comprising the steps of:
storing the plurality of pictures and character data corresponding to the estimated motion direction in a memory;
extracting character data corresponding to the estimated motion direction; displaying the character data corresponding to the estimated motion direction; and
executing a prescribed function set in the terminal (100) if the extracted character data indicates the prescribed function is to be executed.

12. The method of claim 11,
wherein the estimating step further comprises dividing the formerly taken picture into a plurality of first blocks and dividing the latterly taken picture into a plurality of second blocks.

13. The method of claim 12, wherein the estimating step further comprises determining if at least one block from the plurality of first blocks matches at least one block from the plurality of second blocks, and
if the blocks match, estimating the motion direction of the terminal (100) by arranging the formerly and latterly taken pictures together with matching blocks being used as a reference.

14. The method of claim 13, wherein if it is determined that the at least one block in the first blocks does not match the at least one block in the second blocks, the estimating step further comprises determining which block from the first blocks has a highest correlation with a block from the second blocks, and using the blocks with the highest correlation as the reference when estimating the motion direction of the terminal (100).

15. The method of claim 12, wherein the estimating step further comprises selecting a reference block in the first blocks and determining whether the reference block is also included in the second blocks, and if the reference block is in both of the first and second blocks, the estimating step further comprises estimating the motion direction of the terminal (100) by arranging the formerly and latterly taken pictures together with reference blocks being used as a reference.

16. The method of claim 15, wherein if the estimating step determines the reference block is not also included in the second blocks, the estimating step further comprises determining which block from the first blocks has a highest correlation with a block from the second blocks, and uses the blocks with the highest correlation as the reference when estimating the motion direction of the terminal (100).

17. The method of claim 12, wherein the estimating step further comprises determining whether a common block exists in both of the first and second blocks, and if the common block exists in both of the first and second blocks, the estimating step further comprises determining a position of the common block in both of the first and second blocks, calculating a motion vector indicating a movement of the common block from the position in the first blocks to the position in the second blocks, and estimating the motion direction of the terminal (100) based on the calculated motion vector.

18. The method of claim 17, wherein if the estimating step determines the common block does not exist in both of the first and second blocks, the estimating step further comprises determining which block from the first blocks has a highest correlation with a block from the second blocks, and using the blocks with the highest correlation as the reference when estimating the motion direction of the terminal (100).

19. The method of claim 11, wherein the extracted character data comprises a plurality of pieces of character data, and the estimating step further comprises determining if a piece of the character data is currently being displayed, and displaying a next piece of character data from the plurality of pieces of character information if it is determined the piece of character data is currently being displayed based on the estimated motion direction.

20. The method of claim 11, wherein the camera (120) takes the plurality of pictures consecutively at a constant rate.

## Patentansprüche

1. Mobiles Kommunikationsendgerät (100), aufweisend:
eine Kamera (120), die zur Aufnahme einer Mehrzahl Bilder konfiguriert ist, die mindestens ein früher und ein später aufeinander folgend aufgenommenes Bild umfassen;
einen Prozessor (140), der zum Schätzen der Bewegungsrichtung des Endgeräts (100) anhand zumindest einiger der Mehrzahl aufgenommener Bilder konfiguriert ist; und
eine Anzeige (150), die zum Anzeigen einer der geschätzten Bewegungsrichtung entsprechenden Information konfiguriert ist;
**dadurch gekennzeichnet, dass** es ferner aufweist:
einen Speicher (130), der zum Speichern der Mehrzahl Bilder sowie von Zeichendaten mit einem Format entsprechend der geschätzten Bewegungsrichtung konfiguriert ist;
eine Zeichen-Extraktionseinheit (420), die zum Extrahieren der geschätzten Bewegungsrichtung entsprechender Zeichendaten aus dem Speicher (130) konfiguriert ist;
wobei der Prozessor (140) ferner zum Ausführen einer im mobilen Endgerät eingestellten vorgeschriebenen Funktion konfiguriert ist, wenn die extrahierten Zeichendaten angeben, dass die vorgeschriebene Funktion auszuführen ist.

2. Mobiles Endgerät nach Anspruch 1, bei dem der Prozessor (140) zum Teilen des früher aufgenommenen Bildes in eine Mehrzahl erste Blöcke und des später aufgenommenen Bildes in eine Mehrzahl zweite Blöcke konfiguriert ist.

3. Mobiles Endgerät nach Anspruch 2, bei dem der Prozessor (140) zum Bestimmen, ob mindestens ein Block der Mehrzahl erster Blöcke mit mindestens einem Block der Mehrzahl zweiter Blöcke übereinstimmt, konfiguriert ist und bei Übereinstimmung der Blöcke die Bewegungsrichtung des Endgeräts (100) schätzt, indem er das früher und das später aufgenommene Bild zusammen mit übereinstimmenden Blöcken, die als Referenz dienen, anordnet.

4. Mobiles Endgerät nach Anspruch 3, bei dem dann, wenn der Prozessor (140) bestimmt, dass der mindestens eine Block der ersten Blöcke nicht mit dem mindestens einen Block der zweiten Blöcke übereinstimmt, der Prozessor (140) zum Bestimmen konfiguriert ist, welcher Block der ersten Blöcke die höchste Korrelation mit einem Block der zweiten Blöcke hat, und die Blöcke mit der höchsten Korrelation als Referenz beim Schätzen der Bewegungsrichtung des Endgeräts (100) verwendet.

5. Mobiles Endgerät nach Anspruch 2, bei dem der Prozessor (140) zum Wählen eines Referenzblocks in den ersten Blöcken konfiguriert ist und bei dem er bestimmt, ob der Referenzblock auch in den zweiten Blöcken enthalten ist, und wenn der Referenzblock sowohl in den ersten als auch in den zweiten Blöcken enthalten ist, der Prozessor (140) zum Schätzen der Bewegungsrichtung des Endgeräts (100) konfiguriert ist, indem er das früher und das später aufgenommene Bild zusammen mit Referenzblöcken, die als Referenz dienen, anordnet.

6. Mobiles Endgerät nach Anspruch 5, bei dem dann, wenn der Prozessor bestimmt, dass der Referenzblock nicht auch in den zweiten Blöcken enthalten ist, der Prozessor (140) zum Bestimmen, welcher Block der ersten Blöcke die höchste Korrelation mit einem Block der zweiten Blöcke hat, und zur Verwendung der Blöcke mit der höchsten Korrelation als Referenz beim Schätzen der Bewegungsrichtung des Endgeräts konfiguriert ist.

7. Mobiles Endgerät nach Anspruch 2, bei dem der Prozessor (140) zum Bestimmen, ob ein gemeinsamer Block sowohl in den ersten als auch in den zweiten Blöcken vorhanden ist, konfiguriert ist, und wenn der gemeinsame Block sowohl in den ersten als auch in den zweiten Blöcken vorhanden ist, der Prozessor (140) zum Bestimmen einer Position des gemeinsamen Blocks sowohl in den ersten als auch in den zweiten Blöcken, zum Berechnen eines Bewegungsvektors, der eine Bewegung des gemeinsamen Blocks aus der Position in den ersten Blöcken in die Position in den zweiten Blöcken angibt, und zum Schätzen der Bewegungsrichtung des Endgeräts (100) auf Basis des berechneten Bewegungsvektors konfiguriert ist.

8. Mobiles Endgerät nach Anspruch 7, bei dem dann, wenn der Prozessor bestimmt, dass weder in den ersten noch in den zweiten Blöcken ein gemeinsamer Block vorhanden ist, der Prozessor (140) zum Bestimmen, welcher Block aus den ersten Blöcken die höchste Korrelation mit einem Block der zweiten Blöcke hat, und zum Verwenden der Blöcke mit der höchsten Korrelation als Referenz beim Schätzen der Bewegungsrichtung des Endgeräts (100) konfiguriert ist.

9. Mobiles Endgerät nach Anspruch 1, bei dem die extrahierten Zeichendaten eine Mehrzahl Zeichendatenstücke aufweist, und der Prozessor (140) zum Bestimmen konfiguriert ist, ob ein Stück der Zeichendaten aktuell auf der Anzeige angezeigt wird, und zum Anzeigen eines nächsten Zeichendatenstücks aus der Mehrzahl Zeichendatenstücke, wenn bestimmt wird, dass das Zeichendatenstück aktuell angezeigt wird, auf Basis der geschätzten Bewegungsrichtung.

10. Mobiles Endgerät nach Anspruch 1, bei dem die Kamera (120) zur Aufnahme der Mehrzahl aufeinander folgender Bilder mit einer konstanten Geschwindigkeit konfiguriert ist.

11. Verfahren zum Schätzen einer Bewegungsrichtung eines mobilen Kommunikationsendgeräts (100), umfassend:
Aufnehmen einer Mehrzahl Bilder, die mindestens ein früher und ein später aufeinander folgend mit einer am Endgerät (100) vorgesehenen Kamera (120) aufgenommenes Bild umfassen;
Schätzen der Bewegungsrichtung des Endgeräts (100) anhand zumindest einiger der aufgenommenen Mehrzahl Bilder; und
Anzeigen einer der geschätzten Bewegungsrichtung entsprechenden Information;
wobei das Verfahren **dadurch gekennzeichnet ist, dass** es ferner die Schritte umfasst:
Speichern der Mehrzahl Bilder sowie von Zeichendaten, die der geschätzten Bewegungsrichtung entsprechen, in einem Speicher;
Extrahieren der geschätzten Bewegungsrichtung entsprechender Zeichendaten;
Anzeigen der der geschätzten Bewegungsrichtung entsprechenden Zeichendaten; und
Ausführen einer im mobilen Endgerät (100) eingestellten vorgeschriebenen Funktion,
wenn die extrahierten Zeichendaten angeben, dass die vorgeschriebene Funktion auszuführen ist.

12. Verfahren nach Anspruch 11, bei dem der Schätzungsschritt das Teilen des früher aufgenommenen Bildes in eine Mehrzahl erste Blöcke und des später aufgenommenen Bildes in eine Mehrzahl zweite Blöcke umfasst.

13. Verfahren nach Anspruch 12, bei dem der Schätzungsschritt ferner die Bestimmung aufweist, ob mindestens ein Block der Mehrzahl erster Blöcke mit mindestens einem Block der Mehrzahl zweiter Blöcke übereinstimmt, und
bei Übereinstimmung der Blöcke Schätzen der Bewegungsrichtung des Endgeräts (100), indem das früher und das später aufgenommene Bild zusammen mit übereinstimmenden Blöcken, die als Referenz dienen, angeordnet werden.

14. Verfahren nach Anspruch 13, bei dem dann, wenn bestimmt wird, dass der mindestens eine Block der ersten Blöcke nicht mit dem mindestens einen Block der zweiten Blöcke übereinstimmt, der Schätzungsschritt ferner die Bestimmung aufweist, welcher Block der ersten Blöcke die höchste Korrelation mit einem Block der zweiten Blöcke hat, und die Blöcke mit der höchsten Korrelation als Referenz beim Schätzen der Bewegungsrichtung des Endgeräts (100) verwendet.

15. Verfahren nach Anspruch 12, bei dem der Schätzungsschritt ferner das Wählen eines Referenzblocks in den ersten Blöcken und die Bestimmung, ob der Referenzblock auch in den zweiten Blöcken enthalten ist, umfasst, und wenn der Referenzblock sowohl in den ersten als auch in den zweiten Blöcken enthalten ist, der Schätzungsschritt ferner ein Schätzen der Bewegungsrichtung des Endgeräts (100) umfasst, indem das früher und das später aufgenommene Bild zusammen mit Referenzblöcken, die als Referenz dienen, anordnet werden.

16. Verfahren nach Anspruch 15, bei dem dann, wenn im Schätzungsschritt bestimmt wird, dass der Referenzblock nicht auch in den zweiten Blöcken enthalten ist, der Schätzungsschritt ferner die Bestimmung umfasst, welcher Block der ersten Blöcke die höchste Korrelation mit einem Block der zweiten Blöcke hat, und die Blöcke mit der höchsten Korrelation als Referenz beim Schätzen der Bewegungsrichtung des Endgeräts (100) verwendet.

17. Verfahren nach Anspruch 12, bei dem der Schätzungsschritt ferner die Bestimmung, ob ein gemeinsamer Block sowohl in den ersten als auch in den zweiten Blöcken vorhanden ist, umfasst und der Schätzungsschritt ferner die Bestimmung einer Position des gemeinsamen Blocks sowohl in den ersten als auch in den zweiten Blöcken, die Berechnung eines Bewegungsvektor, der die Bewegung des gemeinsamen Blocks aus der Position in den ersten Blöcken in die Position in den zweiten Blöcken angibt, und eine Schätzung der Bewegungsrichtung des Endgeräts (100) auf Basis des berechneten Bewegungsvektors umfasst.

18. Verfahren nach Anspruch 17, bei dem dann, wenn im Schätzungsschritt bestimmt wird, dass weder in den ersten noch in den zweiten Blöcken ein gemeinsamer Block vorhanden ist, der Schätzungsschritt ferner die Bestimmung umfasst, welcher Block der ersten Blöcke die höchste Korrelation mit einer Block der zweiten Blocke hat, und die Blöcke mit der höchsten Korrelation als Referenz bei der Schätzung der Bewegungsrichtung des Endgeräts (100) verwendet werden.

19. Verfahren nach Anspruch 11, bei dem die extrahierten Zeichendaten eine Mehrzahl Zeichendatenstücke aufweisen, und der Schätzungsschritt ferner die Bestimmung aufweist, ob ein Stück der Zeichendaten aktuell angezeigt wird, und die Anzeige eines nächsten Zeichendatenstücks aus der Mehrzahl Zeichendatenstücke umfasst, wenn bestimmt wird, dass das Zeichendatenstück aktuell angezeigt wird, auf Basis der geschätzten Bewegungsrichtung.

20. Verfahren nach Anspruch 11, bei dem die Kamera (120) die Mehrzahl Bilder aufeinander folgend mit einer konstanten Geschwindigkeit aufnimmt.

## Revendications

1. Terminal de communication mobile (100), comprenant :
un appareil photo (120) configuré pour prendre une pluralité de photos comprenant au moins des photos prises consécutivement en premier lieu et en dernier lieu ;
un processeur (140) configuré pour estimer la direction de mouvement du terminal (100) en utilisant au moins certaines de la pluralité de photos prises ; et
un affichage (150) configuré pour afficher une information correspondant à la direction de mouvement estimée ;
**caractérisé en ce qu'**il comprend en outre :
une mémoire (130) configurée pour mémoriser la pluralité de photos et des données caractères présentant un format qui correspond à la direction de mouvement estimée ;
une unité d'extraction de caractère (420) configurée pour extraire des données caractères correspondant à la direction de mouvement estimée à partir de la mémoire (130) ;
dans lequel le processeur (140) est en outre configuré pour exécuter une fonction prescrite établie dans le terminal mobile si les données caractères extraites indiquent que la fonction prescrite ne doit pas être exécutée.

2. Terminal mobile selon la revendication 1,
dans lequel le processeur (140) est configuré pour diviser la photo prise en premier lieu en une pluralité de premiers blocs et divise la photo prise en dernier lieu en une pluralité de deuxièmes blocs.

3. Terminal mobile selon la revendication 2,
dans lequel le processeur (140) est configuré pour déterminer si au moins un bloc provenant de la pluralité de premiers blocs correspond à au moins un bloc provenant de la pluralité de deuxièmes blocs, et si les blocs correspondent, estime la direction de mouvement du terminal (100) en disposant les photos prises en premier lieu et en dernier lieu conjointement avec les blocs correspondants étant utilisés en tant que référence.

4. Terminal mobile selon la revendication 3,
dans lequel, si le processeur (140) détermine que le au moins un bloc dans les premiers blocs ne correspond pas au au moins un bloc dans les deuxièmes blocs, le processeur (140) est configuré pour déterminer quel bloc provenant des premiers blocs présente la corrélation la plus élevée avec un bloc provenant des deuxièmes blocs, et pour utiliser les blocs présentant la corrélation la plus élevée en tant que référence lors de l'estimation de la direction de mouvement du terminal (100).

5. Terminal mobile selon la revendication 2,
dans lequel le processeur (140) est configuré pour sélectionner un bloc de référence dans les premiers blocs et détermine si le bloc de référence est également contenu dans les deuxièmes blocs, et si le bloc de référence se trouve à la fois dans les premiers et les deuxièmes blocs, le processeur (140) est configuré pour estimer la direction de mouvement du terminal (100) en disposant les photos prises en premier lieu et en dernier lieu conjointement avec les blocs de référence étant utilisés en tant que référence.

6. Terminal mobile selon la revendication 5,
dans lequel, si le processeur détermine que le bloc de référence n'est pas également contenu dans les deuxièmes blocs, le processeur (140) est configuré pour déterminer quel bloc provenant des premiers blocs présente la corrélation la plus élevée avec un bloc provenant des deuxièmes blocs, et pour utiliser les blocs présentant la corrélation la plus élevée en tant que référence lors de l'estimation de la direction de mouvement du terminal.

7. Terminal mobile selon la revendication 2,
dans lequel le processeur (140) est configuré pour déterminer si un bloc commun existe à la fois dans les premiers et les deuxièmes blocs, et si le bloc commun existe à la fois dans les premiers et les deuxièmes blocs, le processeur (140) est configuré pour déterminer une position du bloc commun à la fois dans les premiers et les deuxièmes blocs, pour calculer un vecteur de mouvement indiquant un mouvement du bloc commun de la position dans les premiers blocs à la position dans les deuxièmes blocs, et pour estimer la direction de mouvement du terminal (100) sur la base du vecteur de mouvement calculé.

8. Terminal mobile selon la revendication 7,
dans lequel, si le processeur détermine que le bloc commun ne se trouve pas à la fois dans les premiers et les deuxièmes blocs, le processeur (140) est configuré pour déterminer quel bloc provenant des premiers blocs présente la corrélation la plus élevée avec un bloc provenant des deuxièmes blocs, et pour utiliser les blocs présentant la corrélation la plus élevée en tant que référence lors de l'estimation de la direction de mouvement du terminal (100).

9. Terminal mobile selon la revendication 1, dans lequel les données caractères extraites comprennent une pluralité de parties de données caractères, et le processeur (140) est configuré pour déterminer si une partie des données caractères est actuellement en cours d'affichage sur l'affichage, et pour afficher une partie suivante des données caractères provenant de la pluralité de parties de données caractères s'il est déterminé que la partie de données caractères est actuellement en cours d'affichage sur la base de la direction de mouvement estimée.

10. Terminal mobile selon la revendication 1, dans lequel l'appareil photo (120) est configuré pour prendre la pluralité de photos consécutivement à une vitesse constante.

11. Procédé d'estimation d'une direction de mouvement d'un terminal de communication mobile (100), comprenant les étapes consistant à :
prendre une pluralité de photos comprenant au moins des photos prises consécutivement en premier lieu et en dernier lieu avec un appareil photo (120) prévu sur le terminal (100) ;
estimer la direction de mouvement du terminal (100) en utilisant au moins certaines parmi la pluralité de photos prises ; et
afficher l'information correspondant à la direction de mouvement estimée,
le procédé étant **caractérisé en ce qu'**il comprend en outre les étapes consistant à :
mémoriser la pluralité de photos et de données caractères correspondant à la direction de mouvement estimée dans une mémoire ;
extraire les données caractères correspondant à la direction de mouvement estimée ;
afficher les données caractères correspondant à la direction de mouvement estimée ; et
exécuter une fonction prescrite établie dans le terminal (100) si les données caractères extraites indiquent que la fonction prescrite doit être exécutée.

12. Procédé selon la revendication 11,
dans lequel l'étape d'estimation comprend en outre l'étape consistant à diviser la photo prise en premier lieu en une pluralité de premiers blocs et à diviser la photo prise en dernier lieu en une pluralité de deuxièmes blocs.

13. Procédé selon la revendication 12, dans lequel l'étape d'estimation comprend en outre les étapes consistant à déterminer si au moins un bloc provenant de la pluralité de premiers blocs correspond à au moins un bloc provenant de la pluralité de deuxièmes blocs, et
si les blocs correspondent, estimer la direction de mouvement du terminal (100) en disposant les photos prises en premier lieu et en dernier lieu conjointement avec les blocs correspondants étant utilisés en tant que référence.

14. Procédé selon la revendication 13, dans lequel, s'il est déterminé que le au moins un bloc dans les premiers blocs ne correspond pas au au moins un bloc dans les deuxièmes blocs, l'étape d'estimation comprend en outre les étapes consistant à déterminer quel bloc provenant des premiers blocs présente la corrélation la plus élevée avec un bloc provenant des deuxièmes blocs, et utiliser les blocs présentant la corrélation la plus élevée en tant que référence lors de l'estimation de la direction de mouvement du terminal (100).

15. Procédé selon la revendication 12, dans lequel l'étape d'estimation comprend en outre les étapes consistant à sélectionner un bloc de référence dans les premiers blocs et déterminer si le bloc de référence est également contenu dans les deuxièmes blocs, et si le bloc de référence se trouve à la fois dans les premiers et les deuxièmes blocs, l'étape d'estimation comprend de plus l'estimation de la direction de mouvement du terminal (100) en disposant les photos prises en premier lieu et en dernier lieu conjointement avec les blocs de référence étant utilisés en tant que référence.

16. Procédé selon la revendication 15, dans lequel, si l'étape d'estimation détermine que le bloc de référence n'est pas également contenu dans les deuxièmes blocs, l'étape d'estimation comprend en outre l'étape consistant à déterminer quel bloc provenant des premiers blocs présente la corrélation la plus élevée avec un bloc provenant des deuxièmes blocs, et utilise les blocs présentant la corrélation la plus élevée en tant que référence lors de l'estimation de la direction de mouvement du terminal (100).

17. Procédé selon la revendication 12, dans lequel l'étape d'estimation comprend en outre l'étape consistant à déterminer si un bloc commun se trouve à la fois dans les premiers et les deuxièmes blocs, et si le bloc commun se trouve à la fois dans les premiers et les deuxièmes blocs, l'étape d'estimation comprend en outre les étapes consistant à déterminer une position du bloc commun à la fois dans les premiers et les deuxièmes blocs, calculer un vecteur de mouvement indiquant un mouvement du bloc commun de la position dans les premiers blocs à la position dans les deuxièmes blocs, et estimer la direction de mouvement du terminal (100) sur la base du vecteur de mouvement calculé.

18. Procédé selon la revendication 17, dans lequel, si l'étape d'estimation détermine que le bloc commun ne se trouve pas à la fois dans les premiers et les deuxièmes blocs, l'étape d'estimation comprend en outre les étapes consistant à déterminer quel bloc provenant des premiers blocs présente la corrélation la plus élevée avec un bloc provenant des deuxièmes blocs, et utiliser les blocs présentant la corrélation la plus élevée en tant que référence lors de l'estimation de la direction de mouvement du terminal (100).

19. Procédé selon la revendication 11, dans lequel les données caractères extraites comprennent une pluralité de parties de données caractères, et l'étape d'estimation comprend en outre les étapes consistant à déterminer si une partie des données caractères est actuellement en cours d'affichage, et afficher une partie suivante des données caractères provenant de la pluralité de parties de données caractères s'il est déterminé que la partie de données caractères est actuellement en cours d'affichage sur la base de la direction de mouvement estimée.

20. Procédé selon la revendication 11, dans lequel l'appareil photo (120) prend la pluralité de photos consécutivement à une vitesse constante.
